# EUROPÄISCHE PATENTANMELDUNG

(11) **EP 3 599 797 A1**
(43) Veröffentlichungstag der Anmeldung: **29.01.2020**
(21) Anmeldenummer: 19188113.5
(22) Anmeldetag: 24.07.2019
(51) Int. Cl.: H05B 33/08, F21S 4/24, H02J 50/05

(54) **LEUCHTSYSTEM UND VERFAHREN ZUM BETREIBEN EINES LEUCHTSYSTEMS**

(30) Priorität: 26.07.2018 DE 102018118151; 03.09.2018 DE 102018121444
(71) Anmelder: Bilton International GmbH, 5760 Saalfelden (AT)
(72) Erfinder: Michal, Roland, 1230 Wien (AT); Witthalm, Franz, 1030 Wien (AT)
(74) Vertreter: Epping - Hermann - Fischer

(57) **Zusammenfassung**

Die Erfindung betrifft ein Leuchtsystem (1), umfassend
- wenigstens eine Leuchtdiode, LED, (5)
- je LED (5) eine mit der wenigstens einen LED (5) verschaltete Gleichrichterschaltung (6), und
- eine mit jeder Gleichrichterschaltung (6) verschaltete Einspeisevorrichtung (3) zur Erzeugung einer hochfrequenten Wechselspannung,
wobei
- die Einspeisevorrichtung (3) von jeder Gleichrichterschaltung (6) mittels wenigstens zwei Koppelkondensatoren (4) galvanisch entkoppelt ist,
- die Einspeisevorrichtung (3) wenigstens zwei Betriebszustände aufweist, in denen die Einspeisevorrichtung (3) dazu eingerichtet ist, die wenigstens eine LED (5) über die Gleichrichterschaltungen (6) und die wenigstens zwei Koppelkondensatoren (4) zu bestromen, und
- das Leuchtsystem (1) ferner dazu eingerichtet ist, einen von der wenigstens einen LED (5) ausgestoßenen Lichtstrom mittels einer Änderung des Betriebszustands der Einspeisevorrichtung (3) zu verändern.

Die Erfindung betrifft des Weiteren ein Verfahren zum Betreiben eines derartigen Leuchtsystems (1).

## Beschreibung

Die vorliegende Erfindung betrifft ein Leuchtsystem umfassend wenigstens eine Leuchtdiode (im folgenden "LED") und ein Verfahren zum Betreiben eines derartigen Leuchtsystems.

Herkömmliche LED-Leuchtsysteme, beispielsweise mit LED-Lichtbändern, bestehen gewöhnlich aus Segmenten, die typischerweise jeweils eine Länge von etwa 50 mm aufweisen. Diese Segmente werden parallel zueinander geschaltet und gewöhnlich mit einer konstanten Gleichspannung von 12 V oder 24 V betrieben. Jedes dieser Segmente weist gewöhnlich 6 oder 7 LEDs auf, die untereinander verschaltet sind.

Im Allgemeinen sind zwei Varianten für ein elektronisches Design solcher Leuchtsysteme bekannt. Gemäß einer ersten Variante wird ein Leuchtdiodenstrom eines Segments mittels eines Stromreglers konstant auf einem vorbestimmten Wert gehalten. Derartige Leuchtsysteme sind jedoch verhältnismäßig aufwendig und dementsprechend teuer. Gemäß einer zweiten Variante wird der Leuchtdiodenstrom eines Segments mittels einem elektrischen Widerstand bestimmt. Derartige Leuchtsysteme sind einfach und kostengünstig herstellbar. Ein Lichtstrom eines solchen Leuchtsystems fällt jedoch graduell entlang der verschalteten LEDs ab, da gemäß dieser Variante kein Stromregler vorgesehen ist. In beiden Varianten treten nicht unerhebliche elektrische Verluste auf, die eine Effizienz der Leuchtsysteme beeinträchtigen.

Für eine Veränderung der Helligkeit derartiger Leuchtsysteme, d.h. Veränderung des durch die LEDs ausgestoßenen Lichtstroms, auch bekannt als "Dimmen", wird eine Stromversorgung der LEDs mittels Pulsweitenmodulation (PWM)-Steuerung mit einer bestimmten Taktfrequenz ein- und ausgeschaltet. Durch das Ein- und Ausschalten entsteht ein Flackern der LEDs, mittels dessen Frequenz die vom menschlichen Auge wahrgenommene Helligkeit geregelt werden kann. Je nach gewünschter Helligkeit werden Taktfrequenzen von 100 Hz bis zu wenigen Kilohertz verwendet. Obwohl ein solches Flackern für das menschliche Auge erst ab Taktfrequenzen von weniger als 25 Hz bewusst wahrnehmbar ist, wird vermutet, dass dieses Flackern auch bei höheren Taktfrequenzen für den menschlichen Organismus gesundheitsschädlich sein kann, oder zumindest von Menschen als unangenehm wahrgenommen wird.

Aufgabe der vorliegenden Erfindung ist es, ein Leuchtsystem und ein Verfahren zum Betreiben eines Leuchtsystems zu beschreiben, die die oben genannten Nachteile herkömmlicher Leuchtsysteme beheben oder mindern.

Diese Aufgabe wird durch ein Leuchtsystem und ein Verfahren zum Betreiben eines Leuchtsystems gemäß der unabhängigen Patentansprüche gelöst. Vorteilhafte Ausgestaltungen sind in den Unteransprüchen angegeben. Der Offenbarungsgehalt der Patentansprüche wird hiermit vollständig durch Rückbezug in die vorliegende Beschreibung aufgenommen.

Bei einer Ausführungsform des Leuchtsystems umfasst dieses wenigstens eine Leuchtdiode, LED. Je LED umfasst das Leuchtsystem ferner eine mit der wenigstens einen LED verschaltete Gleichrichterschaltung. Des Weiteren umfasst das Leuchtsystem eine mit jeder Gleichrichterschaltung verschaltete Einspeisevorrichtung zur Erzeugung einer hochfrequenten Wechselspannung. Die Einspeisevorrichtung ist von jeder Gleichrichterschaltung mittels wenigstens zwei Koppelkondensatoren galvanisch entkoppelt. Die Einspeisevorrichtung weist wenigstens zwei Betriebszustände auf, in denen die Einspeisungsvorrichtung dazu eingerichtet ist, die wenigstens eine LED über die Gleichrichterschaltungen und die wenigstens zwei Koppelkondensatoren zu bestromen. Das Leuchtsystem ist ferner dazu eingerichtet, einen von der wenigstens einen LED ausgestoßenen Lichtstrom mittels einer Änderung des Betriebszustands der Einspeisevorrichtung zu verändern.

Unter Leuchtdioden werden vorliegend sowohl Leuchtdiodenchips als auch LED-Bauteile mit einem solchen Leuchtdiodenchip verstanden. Zum Beispiel sind die Leuchtdioden oberflächenmontierbar. Ein Leuchtdiodenchip kann einen optoelektronischen Halbleiterkörper oder eine organische Schichtenfolge umfassen. Anders ausgedrückt kann es sich bei den Leuchtdiodenchips um Halbleiterchips oder OLED-Chips handeln. Die Leuchtdioden emittieren im bestimmungsgemäßen Betrieb bevorzugt Licht im sichtbaren Spektralbereich oder im UV-Bereich oder im IR-Bereich.

Ein Vorteil des hier gezeigten Leuchtsystems ist es, dass über die Koppelkondensatoren eine kapazitive Kopplung zur Energieübertragung zum Bestromen der LEDs verwendet wird. Mittels der hochfrequenten Wechselspannung werden Verschiebungsströme in den Koppelkondensatoren erzeugt, mit denen die LEDs betrieben werden. Eine Änderung des Betriebszustands der Einspeisevorrichtung bewirkt eine Änderung einer Größe der Verschiebungsströme. Auf diese Weise wird kein Flackern der LEDs zum Dimmen des Leuchtsystems erzeugt, wie es bei herkömmlichen LED-Leuchtsystemen üblich ist. Mit anderen Worten, es wird gemäß dieser Ausführungsform stets ein kontinuierlicher Lichtstrom von der wenigstens einen LED erzeugt. Des Weiteren ermöglicht das hier beschriebene Leuchtsystem ein Dimmen des Leuchtsystems bis auf ein Tausendstel eines maximalen Lichtstroms des Leuchtsystems.

Bei einer Ausführungsform des Leuchtsystems weist die von der Einspeisevorrichtung erzeugte hochfrequente Wechselspannung in unterschiedlichen Betriebszuständen der Einspeisevorrichtung unterschiedliche Frequenzen auf.

Die Koppelkondensatoren stellen kapazitive Elemente dar. Die Induktivitäten der Verschaltung der Einspeisevorrichtung mit den Koppelkondensatoren, der Gleichrichterschaltungen und der LEDs stellen induktive Elemente dar. Die induktiven Elemente bilden mit den kapazitiven Elementen jeweils einen Schwingkreis. Die hochfrequente Wechselspannung, die von der Einspeisevorrichtung erzeugt wird, kann beispielsweise eine Frequenz entsprechend einer Resonanzfrequenz dieses Schwingkreises aufweisen, oder von dieser Resonanzfrequenz abweichen.

Eine Änderung der Frequenz der von der Einspeisevorrichtung erzeugten hochfrequenten Wechselspannung bewirkt somit, dass, beispielsweise, in einem ersten Betriebszustand der Schwingkreis mit seiner Resonanzfrequenz betrieben wird, in einem zweiten Betriebszustand der Einspeisevorrichtung die Frequenz der hochfrequenten Wechselspannung von der Resonanzfrequenz des Schwingkreises beispielsweise um 10 % abweicht und in einem dritten Betriebszustand der Einspeisevorrichtung die hochfrequente Wechselspannung um beispielsweise 20 % von der Resonanzfrequenz des Schwingkreises abweicht. Der ausgestoßene Lichtstrom ist in diesem Beispiel in dem ersten Betriebszustand am größten, in dem zweiten Betriebszustand geringer als in dem ersten Betriebszustand und in dem dritten Betriebszustand geringer als in dem zweiten Betriebszustand. Je nachdem, wie fein die Abweichungen der Frequenz der hochfrequenten Wechselspannung gewählt werden, sind auf diese Weise sehr kleinstufige Dimmschritte des Leuchtsystems erreichbar.

Bei einer Ausführungsform des Leuchtsystems weist die von der Einspeisevorrichtung erzeugte hochfrequente Wechselspannung in unterschiedlichen Betriebszuständen der Einspeisevorrichtung unterschiedliche Amplitudenhöhen auf.

Beispielsweise ist in einem ersten Betriebszustand der Einspeisevorrichtung die Amplitudenhöhe der hochfrequenten Wechselspannung doppelt so groß, wie in einem zweiten Betriebszustand. Durch die unterschiedlich hohen Amplituden der Wechselspannung in den unterschiedlichen Betriebszuständen werden die Koppelkondensatoren unterschiedlich stark aufgeladen. Auf diese Weise werden unterschiedlich große Verschiebungsströme zum Bestromen der LEDs erzeugt. Auch hier sind sehr feinstufige Dimmschritte erzielbar, in Abhängigkeit davon, wie genau die Amplitudenhöhe der hochfrequenten Wechselspannung eingestellt wird.

Bei einer Ausführungsform ist die Einspeisevorrichtung dazu eingerichtet, in unterschiedlichen Betriebszuständen unterschiedlich große Impulsgruppen in der hochfrequenten Wechselspannung zu unterdrücken.

Impulsgruppen sind aufeinanderfolgende Impulse der hochfrequenten Wechselspannung. Alternativ können Impulsgruppen auch Impulse sein, die beispielsweise gleichmäßig über einen vorbestimmten Zeitraum verteilt sind. Bei einer Wechselspannung von 1 MHz weist die Wechselspannung 1 Million Impulse pro Sekunde auf. Die Einspeisevorrichtung ist dazu eingerichtet, beispielsweise 200 aufeinanderfolgende Impulse pro Sekunde in der Wechselspannung zu unterdrücken. In diesem Fall weist die Impulsgruppe, die unterdrückt wird, eine Größe von 200 Impulsen auf. Alternativ ist es möglich, beispielsweise jeden einhundertsten Impuls zu unterdrücken. Hierzu umfasst die Einspeisevorrichtung beispielsweise einen spannungsgesteuerten Oszillator (VCO). Auf diese Weise ist eine deutlich einfachere Implementierung zum Dimmen des Leuchtsystems möglich, als mit einer Pulsweitenmodulations-Steuerung.

In unterschiedlichen Betriebszuständen der Einspeisevorrichtung werden beispielsweise in einem ersten Betriebszustand 20 %, in einem zweiten Betriebszustand 30 % der Impulse unterdrückt. Je mehr Impulse unterdrückt sind, desto schwächer werden die Koppelkondensatoren aufgeladen und dementsprechend geringer ist ein Strom, der durch die LEDs fließt.

Bei einer Ausführungsform des Leuchtsystems ist die Einspeisevorrichtung dazu eingerichtet, in unterschiedlichen Betriebszuständen die hochfrequente Wechselspannung mittels Pulsweitenmodulation mit unterschiedlichen Taktfrequenzen ein- und auszuschalten, wobei die unterschiedlichen Taktfrequenzen insbesondere Taktfrequenzen von wenigstens 1 MHz umfassen.

Bei einer Ausführungsform des Leuchtsystems umfasst das Leuchtsystem ferner wenigstens eine weitere LED. Die mit der wenigstens einen LED verschalteten Koppelkondensatoren weisen eine andere Kapazität auf als die mit der wenigstens einen weiteren LED verschalteten Koppelkondensatoren.

Die wenigstens eine weitere LED ist ebenfalls mit je einer Gleichrichterschaltung verschaltet. Die wenigstens eine LED und die wenigstens eine weitere LED werden gemeinsam mittels der von der Einspeisevorrichtung erzeugten hochfrequenten Wechselspannung bestromt. Aus den hinsichtlich der Kapazität unterschiedlich dimensionierten Koppelkondensatoren verschiedener LEDs folgen unterschiedliche Resonanzfrequenzen für die Schwingkreise verschiedener LEDs. In Abhängigkeit einer Frequenz der angelegten Wechselspannung können somit bestimmte LEDs mit einer Resonanzfrequenz ihres zugehörigen Schwingkreises betrieben werden, während andere LEDs bei dieser Frequenz außerhalb der Resonanzfrequenz ihrer zugehörigen Schwingkreise betrieben werden. Dies ermöglicht einen selektiv kontrollierbaren Lumenausstoß einzelner LEDs oder einzelner Gruppen von LEDs an dem Leuchtsystem.

Die selektive Kontrollierbarkeit des Lumenausstoßes unterschiedlicher LEDs oder LED-Gruppen ermöglicht insbesondere ein sogenanntes Human Centric Lighting, HCL, oder eine sogenannte hortikulturelle Beleuchtung, bei denen eine tageslichtähnliche Beleuchtung für Menschen oder Pflanzen und Tiere erzeugt wird. Hierfür werden in dem hierin beschriebenen Leuchtsystem LEDs bzw. LED-Gruppen mit verschiedenen Farbtemperaturen mit unterschiedlich dimensionierten Koppelkondensatoren versehen. Beispielsweise werden die Koppelkondensatoren von LEDs mit einer höheren Farbtemperatur größer dimensioniert als die Koppelkondensatoren von LEDs mit niedrigerer Farbtemperatur. Durch eine entsprechende Verschiebung der Frequenz der angelegten Wechselspannung entsprechend einer Tageszeit oder, beispielsweise, entsprechend einer gemessenen Farbtemperatur eines aktuellen Tageslichts, können so tageslichtähnliche Beleuchtungen durch unterschiedlich starkes Dimmen der LEDs bzw. LED-Gruppen mit unterschiedlichen Farbtemperaturen generiert werden.

Bei einer Ausführungsform des Verfahrens zum Betreiben eines oben beschriebenen Leuchtsystems wird ein von der wenigstens einen LED ausgestoßener Lichtstrom mittels einer Änderung des Betriebszustands der Einspeisevorrichtung geändert. Die Änderung des Betriebszustands der Einspeisevorrichtung umfasst wenigstens eine der folgenden Änderungen:
- Ändern einer Frequenz der hochfrequenten Wechselspannung,
- Ändern einer Amplitudenhöhe der hochfrequenten Wechselspannung,
- Ändern einer Größe einer in der hochfrequenten Wechselspannung unterdrückten Impulsgruppe, und
- Ändern einer Taktfrequenz, mit der mittels Pulsweitenmodulation die hochfrequente Wechselspannung an- und ausgeschaltet wird.

Gemäß dem hier beschriebenen Verfahren ist es auch möglich, mehrere der oben genannten Möglichkeiten zur Änderung des Betriebszustands miteinander zu kombinieren und, beispielsweise, einen Betriebszustand der Einspeisevorrichtung zu ändern, indem sowohl die Frequenz als auch die Amplitudenhöhe geändert werden. Beliebige Kombinationen sind hierbei möglich.

Die Vorteile und Ausgestaltungsmöglichkeiten des Verfahrens zum Betreiben des Leuchtsystems entsprechen den oben beschriebenen Vorteilen und Ausgestaltungsmöglichkeiten des Leuchtsystems. Sämtliche oben beschriebenen Ausgestaltungen eines Leuchtsystems bzw. eines Verfahrens zum Betreiben eines Leuchtsystems sind entsprechend untereinander bedarfsgemäß kombinierbar.

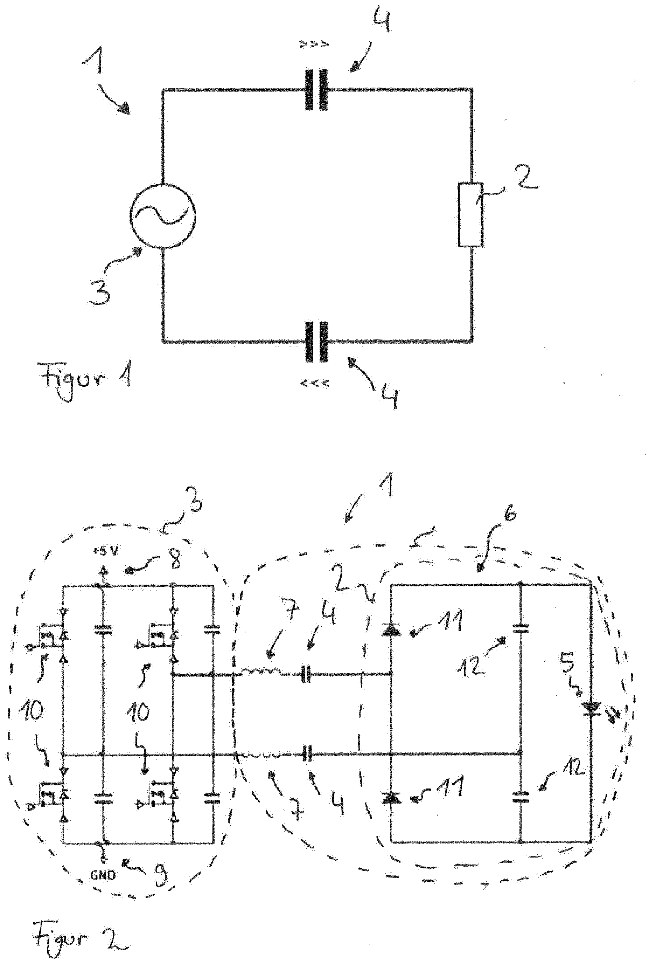

Das Leuchtsystem und das Verfahren zum Betreiben des Leuchtsystems werden im Folgenden anhand von Ausführungsbeispielen in Verbindung mit den Figuren 1 bis 3 näher erläutert. In den Figuren werden für Elemente mit im Wesentlichen gleicher Funktion gleiche Bezugszeichen verwendet, diese Elemente müssen jedoch nicht in allen Einzelheiten identisch sein. Die Figuren sind grundsätzlich nicht maßstabsgetreu. Die Größenverhältnisse der verschiedenen Bestandteile untereinander entsprechen nicht der Wirklichkeit. Beispielsweise können vergleichsweise kleine Elemente zur besseren Veranschaulichung übertrieben groß dargestellt sein und umgekehrt.

In den Figuren zeigen:
- Figur 1: eine schematische Darstellung eines Leuchtsystems gemäß einem Ausführungsbeispiel der Erfindung,
- Figur 2: ein Schaltbild des Leuchtsystems gemäß Figur 1, und
- Figur 3: eine perspektivische schematische Darstellung eines Leuchtsystems gemäß einem Ausführungsbeispiel der Erfindung.

Bei dem in Figur 1 schematisch dargestellten Leuchtsystem 1 umfasst das Leuchtsystem 1 einen Verbraucher 2, umfassend eine LED und eine Gleichrichterschaltung (genauer beschrieben mit Bezug auf Figur 2), eine Einspeisevorrichtung 3 und zwei zwischen den Verbraucher 2 und die Einspeisevorrichtung 3 geschaltete Koppelkondensatoren 4. Einer der beiden Koppelkondensatoren 4 ist in einer Hinleitung und der andere Koppelkondensator 4 in einer Masserückleitung zwischen dem Verbraucher 2 und der Einspeisevorrichtung 3 angeordnet.

Die Induktivitäten des Verbrauchers 2 und der entsprechenden Verschaltung bilden mit den Koppelkondensatoren 4 einen Empfängerschwingkreis. Die Induktivitäten der Einspeisevorrichtung 3 und der entsprechenden Verschaltung bildet mit den Koppelkondensatoren 4 einen Sendeschwingkreis. Beide Schwingkreise sind über die Koppelkondensatoren 4 miteinander gekoppelt. Der Empfängerschwingkreis weist eine unter anderem von den Kapazitäten der Koppelkondensatoren 4 abhängige Resonanzfrequenz auf.

Die Einspeisevorrichtung 3 ist dazu eingerichtet, eine hochfrequente Wechselspannung zu erzeugen und an die Koppelkondensatoren 4 anzulegen. Die hochfrequente Wechselspannung weist eine Frequenz im Megaherzbereich auf. In den Koppelkondensatoren wird basierend auf dieser hochfrequenten Wechselspannung ein Verschiebungsstrom erzeugt, der von der Gleichrichterschaltung in dem Verbraucher 2 gleichgerichtet und geglättet wird und an die LED angelegt wird.

Die Einspeisevorrichtung 3 ist dazu eingerichtet, die Frequenz der hochfrequenten Wechselspannung zu verändern bzw. hochfrequente Wechselspannungen mit unterschiedlichen Frequenzen zu erzeugen.

Beispielsweise in einem ersten Betriebszustand der Einspeisevorrichtung 3 erzeugt die Einspeisevorrichtung 3 eine hochfrequente Wechselspannung, deren Frequenz einer Resonanzfrequenz des Empfängerschwingkreises entspricht. In einem zweiten Betriebszsutand erzeugt die Einspeisevorrichtung 3 eine hochfrequente Wechselspannung, deren Frequenz von der Resonanzfrequenz des Empfängerschwingkreises abweicht. Je stärker diese Abweichung ist, desto schwächer ist die resonante Kopplung über die Kondensatoren 4 und dementsprechend schwächer ist der Strom, der durch den Verbraucher 2 fließt. Auf diese Weise wird ein Lichtstrom der LED des Verbrauchers 2 in dem zweiten Betriebszustand reduziert. Die LED wird gedimmt.

In der Figur 1 ist zur einfachen Darstellung nur ein Empfängerschwingkreis mit nur einem Verbraucher 2 gezeigt. In einem Leuchtsystem mit mehreren Verbrauchern werden die Verbraucher 2 parallel zueinander geschaltet und gemeinsam mit der hochfrequenten Wechselspannung von der Einspeisevorrichtung 3 versorgt. Jeder Verbraucher ist dann mit jeweils zwei Koppelkondensatoren von an die Einspeisevorrichtung 3 angeschlossenen Leitungen galvanisch entkoppelt. Jeder Verbraucher bildet dann mit seinen zugehörenden zwei Koppelkondensatoren einen separaten Empfängerschwingkreis.

Die Resonanzfrequenz der Schwingkreise wird unter anderem durch die Kapazitäten der Koppelkondensatoren 4 beeinflusst. Es ist somit möglich, zwei verschiedene Verbraucher 2 mit unterschiedlich dimensionierten Koppelkondensatoren 4 zu verschalten, sodass die Resonanzfrequenzen der zu den Verbrauchern 2 gehörenden Schwingkreise variieren. Auf diese Weise können hochfrequente Wechselspannungen mit unterschiedlichen Frequenzen in der Einspeisevorrichtung 3 erzeugt werden, die beispielsweise entweder der Resonanzfrequenz des Empfängerschwingkreises des einen Verbrauchers 2 oder des anderen Verbrauchers 2 entsprechen. So wird einer der beiden Verbraucher 2 in dem oben beschriebenen ersten Betriebszustand betrieben, während der andere Verbraucher 2 in dem zweiten Betriebszustand betrieben wird.

Auch Zwischenzustände sind selbstverständlich möglich, in denen beispielsweise eine Frequenz gewählt wird, die beispielsweise um etwa 10 % von der Resonanzfrequenz des Schwingkreises des einen Verbrauchers 2 und um etwa 5 % von der Resonanzfrequenz des Schwingkreises des anderen Verbrauchers 2 abweicht. Ferner können so ganze Gruppen von Verbrauchern 2 mit unterschiedlich dimensionierten Koppelkondensatoren 4 verschaltet, oder beliebig viele verschieden dimensionierte Koppelkondensatoren 4 mit entsprechenden Verbrauchern 2 verschaltet sein, sodass Schwingkreise mit beliebig vielen verschiedenen Resonanzfrequenzen vorhanden sind. Zusätzlich können die LEDs verschiedener Verbraucher 2, die mit unterschiedlich dimensionierten Koppelkondensatoren 4 verschaltet sind, unterschiedliche Farben oder Farbtemperaturen aufweisen. Auf diese Weise können unterschiedlichste Dimmszenarien und Farbkonstellationen mit dem Leuchtsystem 1 erzeugt werden.

Eine weitere Möglichkeit, um die LED in dem Verbraucher 2 zu dimmen, ist bei dem hier gezeigten Leuchtsystem 1 dadurch gegeben, dass die Einspeisevorrichtung 3 dazu eingerichtet ist, eine Höhe einer Amplitude der hochfrequenten Wechselspannung zu regulieren. Hierzu umfasst die Einspeisevorrichtung beispielsweise einen spannungsgesteuerten Oszillator (VCO).

Wird beispielsweise die Höhe der Amplitude der Wechselspannung in einem zweiten Betriebszustand gegenüber einem ersten Betriebszustand der Einspeisevorrichtung 3 verringert, so werden die Koppelkondensatoren 4 schwächer auf- bzw. umgeladen. Daraus resultiert ein schwächerer Verschiebungsstrom in den Koppelkondensatoren 4 und somit ein schwächerer gleichgerichteter Strom zum Betreiben der LED des Verbrauchers 2.

Ein Flackern, wie es bei herkömmlichen LED-Leuchtsystemen durch ein Ein- und Ausschalten der LEDs für ein Dimmen erzeugt wird, tritt in beiden oben beschriebenen Fällen nicht auf, da hier ein Dimmen der LED des Verbrauchers 2 dadurch gesteuert wird, dass ein geringerer bzw. höherer Strom durch den Verbraucher 2 fließt.

Eine weitere Möglichkeit, um die LED in dem Verbraucher 2 zu dimmen, ist bei dem hier gezeigten Leuchtsystem 1 dadurch gegeben, dass die Einspeisevorrichtung 3 dazu eingerichtet ist, Impulsgruppen in der hochfrequenten Wechselspannung zu unterdrücken. Dies kann ebenfalls mittels eines VCO in der Einspeisevorrichtung 3 geregelt werden.

In einem ersten Betriebszustand der Einspeisevorrichtung 3 werden beispielsweise keine Impulse in der hochfrequenten Wechselspannung unterdrückt. In einem zweiten Betriebszustand werden beispielsweise 10 % der Impulse unterdrückt. Dies können einzelne Impulse oder mehrere aufeinander folgende Impulsen sein. In dem zweiten Betriebszustand wird die LED des Verbrauchers 2 mit einem geringeren Strom versorgt, sodass der von der LED ausgestoßene Lichtstrom in dem zweiten Betriebszustand reduziert ist.

Eine weitere Möglichkeit, um die LED in dem Verbraucher 2 zu dimmen, ist bei dem hier gezeigten Leuchtsystem 1 dadurch gegeben, dass die Einspeisevorrichtung 3 dazu eingerichtet ist, die hochfrequente Wechselspannung mittels Pulsweitenmodulation ein- und auszuschalten.

Hierbei wird die von der Einspeisevorrichtung erzeugte hochfrequente Wechselspannung mittels Pulsweitenmodulation mit einer Taktfrequenz im Megaherzbereich ein- und ausgeschaltet. Je niedriger die Taktfrequenz gewählt ist, desto weniger Strom fließt durch den Verbraucher 2 und die LED, da bei niedrigerer Taktfrequenz ein geringerer Verschiebungsstrom in den Koppelkondensatoren 4 erzeugt wird.

Obwohl hier, wie bei herkömmlichen LED-Leuchtsystemen, ein pulsweitenmodulationsbasiertes Ein- und Ausschalten zum Dimmen verwendet wird, tritt jedoch auch hier nicht das bei herkömmlichen Systemen problematische Flackern der LEDs auf, da nicht der Strom, der durch die LED fließt, ein- und ausgeschaltet wird, sondern ein Umladen der Koppelkondensatoren 4 langsamer geschieht und somit ein Ladungsausgleich zwischen den mit einem Verbraucher 2 verschalteten Koppelkondensatoren 4 langsamer geschieht, sodass durch den Verbraucher 2 ein geringerer Strom fließt.

Das hierin beschriebene Leuchtsystem 1 kann beispielsweise derart ausgestaltet sein, dass nur eine der oben beschriebenen Möglichkeiten zum Dimmen der LED in dem Verbraucher 2 verwendet wird. Alternativ können auch zwei oder mehr der oben beschriebenen Möglichkeiten zum Dimmen der LED kombiniert werden.

Figur 2 zeigt ein Schaltbild des Leuchtsystems 1 gemäß Figur 1. Das Schaltbild des Leuchtsystems 1 zeigt eine Schaltung des Verbrauchers 2 gemäß Figur 1 mit einer LED 5 und einer zugehörenden Gleichrichterschaltung 6. Der Einfachheit halber ist hier ebenfalls nur die Verschaltung einer einzelnen LED 5 gezeigt. Außerdem zeigt das Schaltbild des Leuchtsystems 1 gemäß Figur 2 eine Schaltung der Einspeisevorrichtung 3 zum Erzeugen einer hochfrequenten Wechselspannung.

In der Schaltung des Leuchtsystems 1 sind ferner zwei Induktivitäten 7 gezeigt, die jeweils in Reihe mit den Koppelkondensatoren 4 geschaltet sind. Die Induktivitäten 7 stellen die Selbstinduktivitäten der Leitungen zwischen der Einspeisevorrichtung 3 und den Verbrauchern 2 dar.

Die Einspeisevorrichtung 3 weist einen seriellen Resonanzwandler auf, der mittels einer Vollbrückenschaltung über die Induktivitäten 7 eine nahezu sinusförmige, hochfrequente Wechselspannung an die Koppelkondensatoren 4 anlegt. Zur Erzeugung der hochfrequenten Wechselspannung liegt an einem ersten Terminal 8 der Einspeisevorrichtung 3 eine Spannung von +5 V an, ein zweites Terminal 9 der Einspeisevorrichtung 3 ist mit einem Massepotenzial GND verbunden. Die Einspeisevorrichtung 3 weist ferner Transistoren 10 auf, die derart geschaltet werden, dass eine vorbestimmte Frequenz der hochfrequenten Wechselspannung erzeugt wird.

Die Gleichrichterschaltung 6 weist zwei Dioden 11 zur Gleichrichtung der in den Koppelkondensatoren 4 erzeugten Verschiebungsströme auf. Die Dioden 11 sind beispielsweise in einem Bauteil als sogenannte Doppeldiode zusammengefasst. In einer Ausgestaltung kann eine Doppeldiode mit einer periodischen Spitzenspannung von 100 V, einem Durchlassstrom von 125 mA und einer Schaltzeit von maximal 4 ns verwendet werden.

Die Gleichrichterschaltung weist ferner zwei Siebkondensatoren 12 auf, die eine Restwelligkeit der gleichgerichteten Spannung vermindern. Eine Mitte zwischen den beiden Siebkondensatoren 12 bildet ein Referenzpotential. Auf diese Weise wird eine möglichst konstante Spannung zum Betreiben der LED 5 erzeugt. In einer alternativen Ausführung können statt der Siebkondensatoren 12 auch induktive Elemente, wie beispielsweise Spulen, zur Glättung verwendet werden.

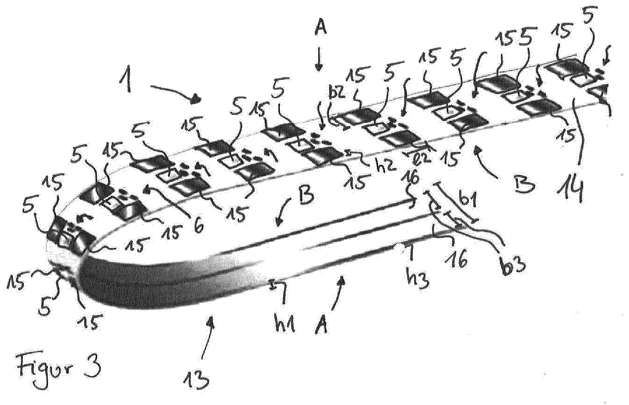

Figur 3 zeigt eine perspektivische Darstellung eines Leuchtsystems 1 gemäß einem Ausführungsbeispiel der Erfindung. Bei dem in Figur 1 dargestellten Ausführungsbeispiel eines Leuchtsystems 1 umfasst das Leuchtsystem 1 ein LED-Lichtband 13. Das LED-Lichtband 13 weist eine langgestreckte flexible bandförmige Leiterplatte 14 auf. Die Leiterplatte 14 weist eine Breite b1 von etwa 10 mm und eine Höhe h1 von etwa 100 µm auf, wobei ein Basismaterial der Leiterplatte aus einem Polyimid mit einer Höhe von 50 µm besteht. An einer ersten Seite A der Leiterplatte 14 ist eine Mehrzahl von LEDs 5 montiert. Die LEDs 5 sind in einer Reihe entlang einer Haupterstreckungsrichtung des LED-Lichtbands 13 angeordnet. Selbstverständlich können die LEDs 5 auch anderweitig auf der Leiterplatte 14 montiert sein. Ferner sind selbstverständlich auch andere Formen der Leiterplatte 14 als die hier gezeigte langgestreckte bandförmige Leiterplatte 14 möglich.

Bei den LEDs 5 handelt es sich beispielsweise jeweils um einen mit einer leadframebasierten Kunststoffumhüllung versehenen LED-Chip, beispielsweise um PLCC2 SMD LEDs, PLCC4 SMD LEDs oder PLCC6 SMD LEDs, High-Power SMD LEDs und/oder LED-Chip-Arrays in SMD-Gehäusen (sogenannten CAS-LEDs), die in Oberflächen(SMD)-Montagetechnologie auf der Leiterplatte 14 montiert sind.

Bei einer alternativen Ausführungsform (nicht gezeigt) handelt es sich bei den LEDs 5 um LED-Chips, die in Chip-onboard (COB)-Technologie auf der Leiterplatte 14 montiert sind.

Die LEDs 5 sind in diesem Ausführungsbeispiel mittig zwischen zwei Seitenkanten der Leiterplatte 14 auf der ersten Seite A der Leiterplatte 14 montiert. Neben den LEDs 5 ist zwischen jeder LED 5 und jeweils einer Seitenkante der Leiterplatte 14 je eine elektrisch leitfähige Kontaktfläche 15 auf der ersten Seite A der Leiterplatte 14 angeordnet. Die Kontaktflächen 15 sind in diesem Ausführungsbeispiel rechteckige Kupferinseln, die sich parallel zu einer Haupterstreckungsebene der Leiterplatte 14 erstrecken. Die Kontaktflächen 15 weisen in diesem Ausführungsbeispiel eine Höhe h2 von etwa 36 µm und eine flächige Ausdehnung von etwa 32 mm², bei einer Breite b2 von etwa 4 mm und einer Länge 12 von etwa 8 mm, auf. Die Kontaktflächen 15 verschiedener LEDs 5 können jedoch auch unterschiedliche flächige Ausdehnungen aufweisen. Auf diese Weise können die Kapazitäten der Kontaktflächen 15 unterschiedlich dimensioniert sein. Die Kontaktflächen 15 werden beispielsweise durch Ätzen einer kupferbeschichteten Leiterplatte hergestellt.

An einer der ersten Seite A gegenüberliegenden zweiten Seite B der Leiterplatte 14 sind zwei elektrisch leitfähige Leiterbahnen 16 angeordnet. Die Leiterbahnen 16 bestehen wie die Kontaktflächen 15 aus Kupfer und erstrecken sich parallel zueinander entlang einer Längsrichtung der bandförmigen Leiterplatte 14. Die Leiterbahnen 16 weisen jeweils eine Höhe h3 von etwa 36 µm und eine Breite b3 von etwas weniger als 5 mm auf. Die Leiterbahnen 16 sind ebenfalls, wie die Kontaktflächen 15, aus einer Kupferbeschichtung herausgeätzt.

Zu jeder LED 5 gehören zwei Kontaktflächen 15, d.h. jede LED 5 ist mit zwei Kontaktflächen 15 elektrisch verschaltet. Die Kontaktflächen 15 und die Leiterbahnen 16 sind so an der Leiterplatte 14 angeordnet, dass je eine der beiden mit derselben LED 5 verschalteten Kontaktflächen 15 jeweils einer der zwei Leiterbahnen 16 gegenüberliegen. Insbesondere überlappt jeweils ein möglichst großer Teil einer Ausdehnungsfläche der Kontaktfläche 15 oder jeweils die gesamte Ausdehnungsfläche der Kontaktfläche 15 mit einer Ausdehnungsfläche der gegenüberliegenden Leiterbahn 16. Jede Kontaktfläche 15 bildet mit der ihr gegenüberliegenden Leiterbahn 16 je einen der mit Bezug auf die Figuren 1 und 2 beschriebenen Koppelkondensatoren 4. Die Kontaktflächen 15 stellen jeweils eine erste Elektrode, die Leiterbahnen 16 jeweils eine zweite Elektrode und die dazwischenliegende Leiterplatte 14 ein Dielektrikum dieser Koppelkondensatoren 4 dar.

Beispielsweise an einem Ende des LED-Lichtbands 13 befinden sich Lötstellen oder andere Anschlussstellen, um die Leiterbahnen 16 mit einer Einspeisevorrichtung zum Anlegen der hochfrequenten Wechselspannung zu verbinden (hier nicht gezeigt).

Weitere Details und Ausgestaltungsmöglichkeiten eines in vorliegend beschriebenem Leuchtsystem 1 verwendbaren LED-Lichtbandes 13 sind in der zeitgleich beim Deutschen Patent- und Markenamt eingereichten Anmeldung mit dem Titel "LED-Lichtband und Leuchtsystem" (Aktenzeichen: DE 10 2018 121 451.0) beschrieben, deren Offenbarungsgehalt hiermit durch Rückbezug vollständig in diese Anmeldung aufgenommen wird. Eine Abschrift der Anmeldung "LED-Lichtband und Leuchtsystem" ist ferner dieser Anmeldung beigefügt.

Die Erläuterung der Erfindung anhand der Ausführungsbeispiele ist nicht als Einschränkung der Erfindung auf diese zu verstehen. Vielmehr können die oben allgemein beschriebenen Elemente und die in den Ausführungsbeispielen beschriebenen Elemente je nach Anforderungsprofil für ein Leuchtsystem unterschiedlich miteinander kombiniert werden und jedes einzelne Element trägt für sich alleine an den der Erfindung zugrundeliegenden eingangs geschilderten Gedanken bei.

### Bezugszeichenliste

- 1: Leuchtsystem
- 2: Verbraucher
- 3: Einspeisevorrichtung
- 4: Koppelkondensator
- 5: Leuchtdiode, LED
- 6: Gleichrichterschaltung
- 7: Induktivität
- 8: erstes Terminal
- 9: zweites Terminal
- 10: Transistor
- 11: Diode
- 12: Siebkondensator
- 13: LED-Lichtband
- 14: Leiterplatte
- 15: Kontaktfläche
- 16: Leiterbahn

- GND: Massepotenzial

- A: erste Seite der Leiterplatte
- B: zweite Seite der Leiterplatte
- b1: Breite der Leiterplatte
- h1: Höhe der Leiterplatte
- b2: Breite der Kontaktfläche
- h2: Höhe der Kontaktfläche
- 12: Länge der Kontaktfläche
- b3: Breite der Leiterbahn
- h3: Höhe der Leiterbahn

## Patentansprüche

1. Leuchtsystem (1), umfassend
- wenigstens eine Leuchtdiode, LED, (5)
- je LED (5) eine mit der wenigstens einen LED (5) verschaltete Gleichrichterschaltung (6), und
- eine mit jeder Gleichrichterschaltung (6) verschaltete Einspeisevorrichtung (3) zur Erzeugung einer hochfrequenten Wechselspannung,
wobei
- die Einspeisevorrichtung (3) von jeder Gleichrichterschaltung (6) mittels wenigstens zwei Koppelkondensatoren (4) galvanisch entkoppelt ist,
- die Einspeisevorrichtung (3) wenigstens zwei Betriebszustände aufweist, in denen die Einspeisevorrichtung (3) dazu eingerichtet ist, die wenigstens eine LED (5) über die Gleichrichterschaltungen (6) und die wenigstens zwei Koppelkondensatoren (4) zu bestromen, und
- das Leuchtsystem (1) ferner dazu eingerichtet ist, einen von der wenigstens einen LED (5) ausgestoßenen Lichtstrom mittels einer Änderung des Betriebszustands der Einspeisevorrichtung (3) zu verändern.

2. Leuchtsystem (1) gemäß Anspruch 1, wobei die hochfrequente Wechselspannung eine Frequenz von wenigstens 1 MHz aufweist.

3. Leuchtsystem (1) gemäß einem der Ansprüche 1 oder 2, wobei die von der Einspeisevorrichtung (3) erzeugte hochfrequente Wechselspannung in unterschiedlichen Betriebszuständen der Einspeisungsvorrichtung (3) unterschiedliche Frequenzen aufweist.

4. Leuchtsystem (1) gemäß einem der Ansprüche 1 bis 3, wobei die von der Einspeisevorrichtung (3) erzeugte hochfrequente Wechselspannung in unterschiedlichen Betriebszuständen der Einspeisevorrichtung (3) unterschiedlichen Amplitudenhöhen aufweist.

5. Leuchtsystem (1) gemäß einem der Ansprüche 1 bis 4, wobei die Einspeisungsvorrichtung (3) dazu eingerichtet ist, in unterschiedlichen Betriebszuständen unterschiedlich große Impulsgruppen in der hochfrequenten Wechselspannung zu unterdrücken.

6. Leuchtsystem (1) gemäß einem der Ansprüche 1 bis 5, wobei die Einspeisevorrichtung (3) dazu eingerichtet ist, in unterschiedlichen Betriebszuständen die hochfrequente Wechselspannung mittels Pulsweitenmodulation mit unterschiedlichen Taktfrequenzen ein- und auszuschalten, wobei die unterschiedlichen Taktfrequenzen insbesondere Taktfrequenzen von wenigstens 1 MHz umfassen.

7. Leuchtsystem (1) gemäß einem der Ansprüche 1 bis 6, ferner umfassend wenigstens eine weitere LED, wobei die mit der wenigstens einen LED (5) verschalteten Koppelkondensatoren (4) eine andere Kapazität als die mit der wenigstens einen weiteren LED verschalteten Koppelkondensatoren aufweisen.

8. Leuchtsystem (1) gemäß einem der Ansprüche 1 bis 7, ferner umfassend eine Leiterplatte (14), wobei
- die wenigstens eine LED (5) und die wenigstens eine Gleichrichterschaltung (6) auf einer ersten Seite (A) der Leiterplatte (14) angeordnet sind,
- jede Gleichrichterschaltung (6) mit jeweils zwei auf der ersten Seite (A) der Leiterplatte (14) angeordneten elektrisch leitfähigen Kontaktflächen (15) verschaltet ist, und
- auf einer zweiten Seite (B) der Leiterplatte (14) zwei Leiterbahnen (16) angeordnet sind, wobei die Einspeisevorrichtung (3) dazu eingerichtet ist, die hochfrequente Wechselspannung an die zwei Leiterbahnen (16) anzulegen und die Koppelkondensatoren (4) jeweils von einer der Kontaktflächen (15) und einer an der Leiterplatte (14) gegenüberliegenden Leiterbahn (16) gebildet werden.

9. Verfahren zum Betreiben eines Leuchtsystems (1) gemäß einem der Ansprüche 1 bis 8, wobei ein von der wenigstens einen LED (5) ausgestoßener Lichtstrom mittels einer Änderung des Betriebszustands der Einspeisevorrichtung (3) geändert wird.

10. Verfahren gemäß Anspruch 9, wobei die Änderung des Betriebszustands der Einspeisevorrichtung (3) wenigstens eine der folgenden Änderungen umfasst:
- Ändern einer Frequenz der hochfrequenten Wechselspannung,
- Ändern einer Amplitudenhöhe der hochfrequenten Wechselspannung,
- Ändern eine Größe einer in der hochfrequenten Wechselspannung unterdrückten Impulsgruppe, und
- Ändern einer Taktfrequenz, mit der mittels Pulsweitenmodulation die hochfrequente Wechselspannung ein- und ausgeschaltet wird.
